# EUROPEAN PATENT APPLICATION

(11) **EP 1 028 344 A2**
(43) Date of publication of application: **16.08.2000**
(21) Application number: 00810110.7
(22) Date of filing: 09.02.2000
(51) Int. Cl.: G02B 27/00

(54) **A device for one-dimensional lens imaging**

(30) Priority: 11.02.1999 US 248482
(71) Applicant: UMM Electronics, Inc., Indianapolis, Indiana 46250 (US)
(72) Inventor: Hutchison, James S., Indianapolis, Indiana 46219 (US)
(74) Representative: Ganguillet, Cyril

(57) **Abstract**

A method and apparatus for decreasing spherical aberration in a lens system for imaging one-dimensional optical samples. In one embodiment the apparatus includes a pair of lenses having a field stop with a slit aperture positioned therebetween. An optical detector array is also provided and is positioned to receive a an image transmitted therethrough from the optical sample. The field stop slit is oriented perpendicular to the direction of the optical sample. The spherical aberration in the direction of the one-dimensional optical sample is decreased in proportion to the square of the aperture h while the transmitted intensity is only decreased in linear proportion to h.

## Description

### TECHNICAL FIELD OF THE INVENTION

The present invention relates generally to the field of optics, and more specifically to one-dimensional imaging through a lens.

### BACKGROUND OF THE INVENTION

Spherical aberration is an optical phenomenon that occurs when light rays passing through different zones of a lens, or reflected in different zones of a mirror, do not unite accurately at one focus. In the case of a lens, the light rays passing through close to the optic axis generally are refracted less and converge at a focus farther away from the lens than do the marginal rays. The spherical aberration of a single spherical lens surface generally increases as the square of the aperture and decreases as the square of the curvature. Spherical aberration for a common lens of curvature R and aperture h may thus be expressed as being proportional to (h/R)².

Typically, spherical aberration is corrected by placing a stop in the optical pathway. A stop is an opaque material having an aperture formed therein. When placed in the optical pathway the stop effectively reduces the size of the lens aperture h, thereby reducing effective spherical aberration of the system. Unfortunately, the addition of the stop to the system also reduces the effective intensity passing through the system, since light intensity passing through a lens is also proportional to h². Hence, there is a tradeoff between acuity and light intensity.

There are a number of applications requiring an optical system having acuity in just one dimension. For example, bar code readers require optics capable of performing imaging of substantially one-dimensional objects (lines). The acuity of bar code reader optics is important only in the direction along which the code (lines) is arranged. In most instances, the bar code reader is a dedicated instrument and so the direction of required acuity is fixed.

Most bar code readers rely on hyperbolic mirrors for imaging and as such do not rely on field stops to increase acuity. There remains a need for a method and apparatus for increasing the acuity a lens system in one dimension without the corresponding high loss of image intensity. The present invention satisfies this need.

### SUMMARY OF THE INVENTION

The present invention relates to a method and apparatus for decreasing spherical aberration in a lens system for imaging one-dimensional optical samples. One form of the present invention includes a pair of lenses with a field stop positioned therebetween. An optical detector array is also provided and is positioned to receive an image transmitted therethrough from the optical sample. The field stop aperture is a slit oriented perpendicular to the direction of the optical sample. The spherical aberration in the direction of the one-dimensional optical sample is decreased with h² while the transmitted intensity is only decreased with h.

One form of the present invention contemplates a combination, comprising: a lens; a field stop having an elongated aperture and positioned adjacent the lens; and means for detecting light positioned adjacent the lens opposite the field stop.

Another form of the present invention contemplates a combination. comprising: a first lens having a diameter, a light entry side, and a light exit side; a field stop having an elongated aperture with a length substantially equal to the diameter and a width substantially smaller than the diameter and positioned adjacent the light entry side; and a light detector positioned adjacent the light exit side.

Still another form of the present invention contemplates a combination, comprising: a housing; a first lens mounted in the housing; a field stop having an elongated slit aperture mounted in the housing adjacent the first lens; a second lens mounted in the housing adjacent the field stop and opposite the first lens; and a photodetector array mounted in the housing and aligned with the first lens, the field stop, and the second lens.

One object of the present invention is to provide an improved optical illumination system. Related objects and advantages of the present invention will be apparent from the following description.

### BRIEF DESCRIPTION OF THE DRAWINGS

FIG. 1 is an exploded perspective view of the preferred embodiment of the present invention.

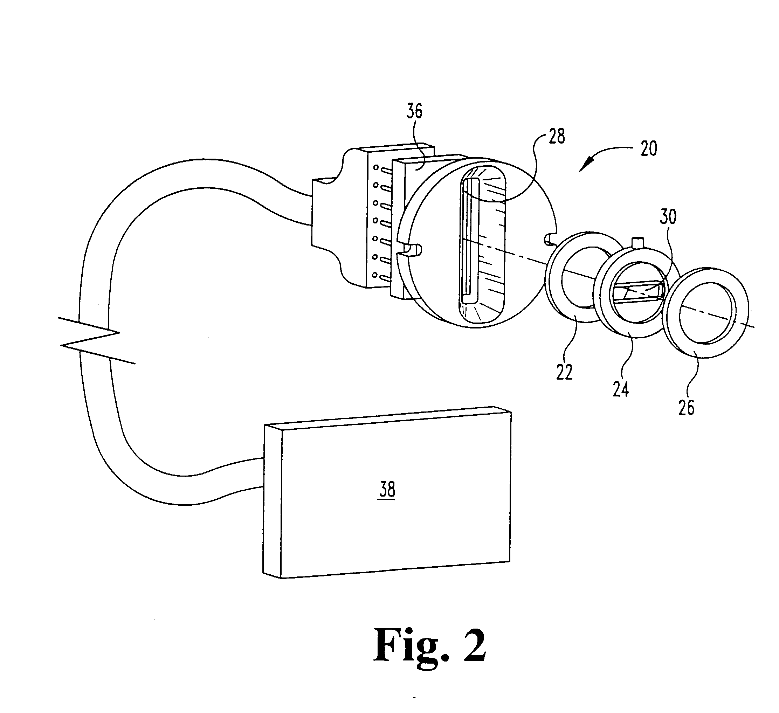

FIG. 2 is a view of the embodiment of FIG. 1 coupled to a microprocessor.

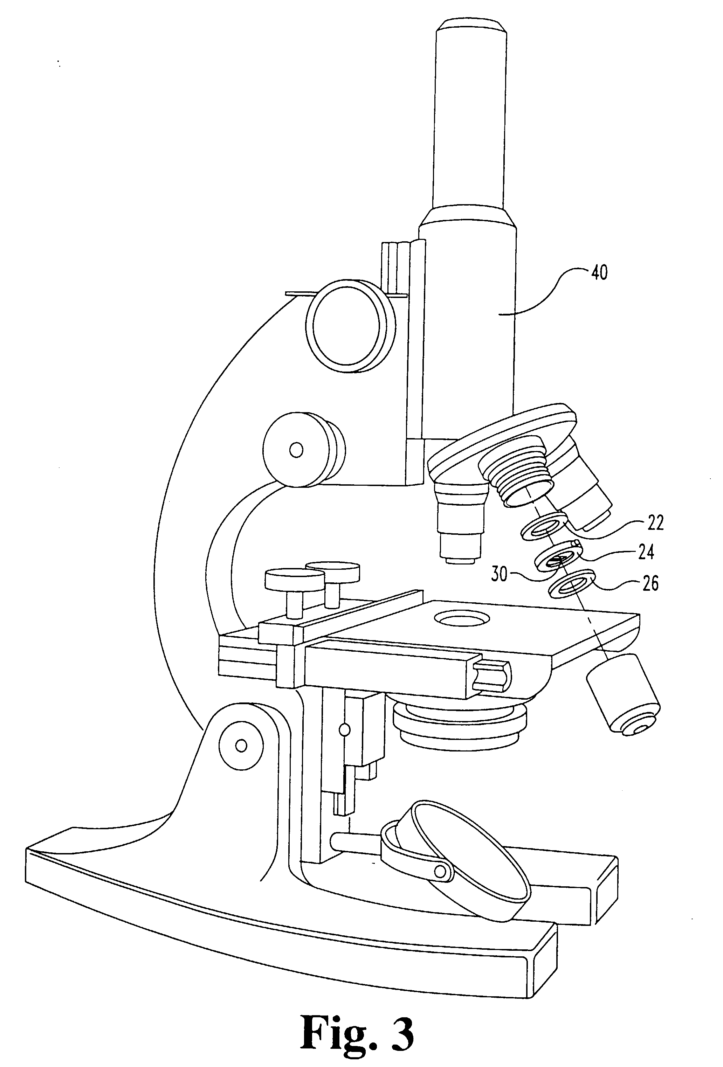

FIG. 3 is a view of FIG. 1 coupled to an optical microscope.

### DETAILED DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

For a common lens of curvature R and aperture h the spherical aberration is proportional to (h/R)². Typically, a stop (an opaque shield with a central hole having a smaller radius than the lens) is used to decrease the spherical aberration by decreasing the aperture size. However, the restriction of light through the stop also decreases the light intensity through the lens. Since light intensity is also proportional to h², increased acuity is obtained at the expense of intensity.

There are some circumstances in which the objects of interest are substantially one-dimensional, such as the lines of code imaged by a bar code reader. For the imaging of lines, acuity is required in only one dimension. The present invention therefore forms a field stop aperture as a narrow rectangle or slit oriented perpendicular to the image line to minimize aberration. The slit aperture may have a length equal to the diameter d of the lens to maximize light throughput, while having a smaller width 2h to reduce aberration.

Therefore, light throughput, and accordingly the transmitted light intensity, in the direction of the one-dimensional optical sample is proportional to 2hd while spherical aberration in that direction is proportional to (h/R)². Accordingly, one-dimensional spherical aberration decreases with the square of h while one-dimensional intensity decreases linearly with h.

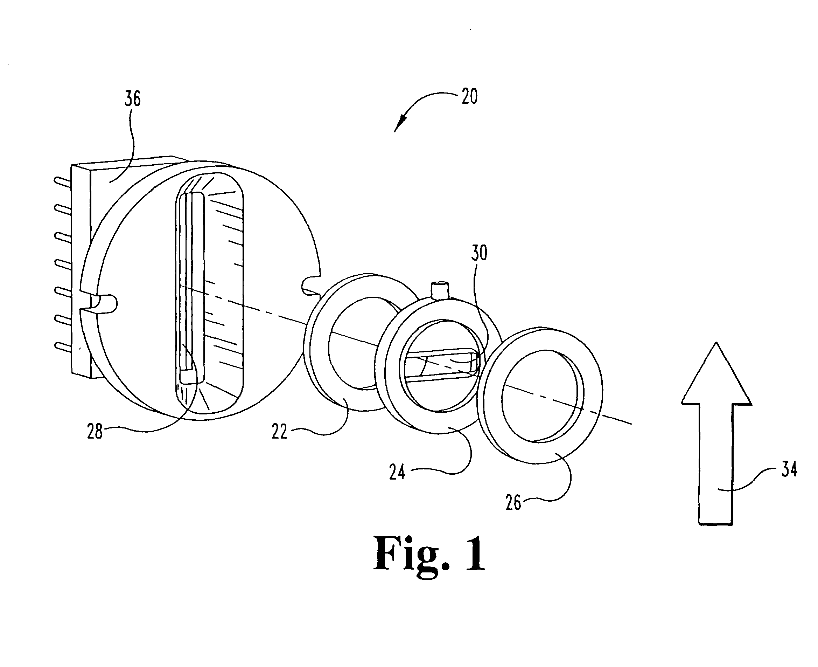

FIG. 1 illustrates the preferred embodiment of an optical system to improve one-dimensional lens imaging 20, having an first lens 22, a field stop 24, an optional second lens 26, and an optional elongated imaging aperture 28. The field stop 24 has an elongated field stop aperture 30. A substantially one-dimensional optical sample 34 is positioned before the optical system 20.

The first and second lenses 22, 26 are common convex lenses, although any lens or lens combination in which at least one of the lenses is subject to spherical aberration may be chosen.

The field stop 24 may be composed of any convenient opaque material. The shape of the field stop aperture 30 is preferably an elongated rectangle. More preferably, the field stop aperture 30 should be a slit. The length of the field stop aperture 30 is substantially greater than the width thereof. Preferably, the length of the field stop aperture 30 should be substantially that of the diameter of the first lens 22 in order to maximize the light throughput and, accordingly, the transmitted light intensity. The width of the field stop aperture 30 should be small to minimize the spherical aberration of the optical system 20. By allowing the field stop aperture 30 to be a narrow slit with a length substantially the diameter of the first lens 22, the light throughput in the direction of the one-dimensional optical sample 34 is only reduced in proportional to the width of the slit while the spherical aberration is reduced in proportion to the square of the width. The relative length and width of the field stop aperture may be varied according to the particular acuity and intensity requirements at hand.

The elongated imaging aperture 28 is oriented substantially parallel to the optical sample 34, and accordingly perpendicular to the field stop 24. The elongated imaging aperture 28 may also have a sufficiently great length-to-width aspect ratio to be considered a narrow slit.

In use, the field stop 24 is aligned perpendicular to the one-dimensional objects of interest. Accordingly, the imaging aperture 28 is oriented parallel to the one-dimensional objects of interest. This allows the optical device 20 to take advantage
of the above-discussed relationships wherein spherical aberration is increased with the square of h while intensity is correspondingly diminished linearly with h.

One form of the present optical system invention is as the optical reader or scanner portion of a bar code reader. An optical bar code reader is essentially a camera requiring acuity in only one direction, the line along which the code is arranged. The bar code reader incorporates the optical system 20 in a dedicated orientation, wherein the field stop 24 is oriented perpendicular to the presented bar code optical sample 34. The optical system 20 passes the image from the optical sample 34 through the filed stop slit 30, through the first lens 22, and onto a photodetector 36. The optical system may also include a second lens 26 positioned between the bar code and the field stop 24 and an imaging aperture 28 positioned between the first lens 22 and the photodetector 36. The photodetector 36 is usually an array of charge-couple devices (CCDs) or photodiodes, and is connectable to a microprocessor 38.

Another form of the invention is as an optical element in a microscope 40. The image from the optical sample 34 passes through the field stop slit 30 and a first lens 22 on its way to the light detector 36 (usually a human eye or photographic film).

While the invention has been illustrated and described in detail in the drawings and foregoing description, the same is to be considered as illustrative and not restrictive in character, it being understood that only the preferred embodiments have been shown and described and that all changes and modifications that come within the spirit of the invention are desired to be protected.

## Claims

1. An optical system, comprising:
a first lens:
a field stop having an elongated aperture and positioned adjacent the first lens; and
a light detector positioned adjacent the lens opposite the field stop.

2. The system of claim 1 wherein the first lens has a diameter and the elongated aperture has a length substantially equal to the diameter.

3. The system of claim 1 wherein the elongated aperture is a slit.

4. The system of claim 1 further comprising a linear optical sample positioned opposite the first lens relative to the field stop and oriented perpendicular to the elongated aperture.

5. The system of claim 1 wherein the means for detecting light is a photodetector array.

6. The system of claim 5 wherein the photodetector array is linear and is oriented perpendicular to the elongated aperture.

7. The system of claim 5 wherein the photodetector array is adapted to be operationally coupled to a microprocessor.

8. An optical reader comprising:
a first lens having a diameter, a light entry side, and a light exit side;
a field stop having an elongated aperture with a length substantially equal to the diameter and a width substantially smaller than the diameter and positioned adjacent the light entry side; and
a light detector positioned adjacent the light exit side.

9. The optical reader of claim 8 further comprising a linear image adapted to be imaged by the first lens.

10. The optical reader of claim 9 wherein the aperture is oriented perpendicular to the linear image.

11. The optical reader of claim 8 wherein the light detector is a linear photodetector array.

12. The optical reader of claim 11 wherein the linear photodetector array is oriented perpendicular to the aperture.

13. The optical reader of claim 8 wherein the light detector is photographic film.

14. The optical reader of claim 8 wherein the light detector is the human eye.

15. The optical reader of claim 8 wherein the aperture is a substantially rectangular slit.

16. The optical reader of claim 8 further comprising a second lens positioned adjacent the field stop and opposite the first lens.

17. The optical reader of claim 8 further comprising:
a second lens positioned adjacent the field stop and opposite the first lens; and
a linear image positioned opposite the field stop relative to the second lens;
wherein the aperture is a substantially rectangular slit;
wherein the linear image is oriented perpendicular to the elongated aperture; and
wherein the light detector is a linear photodetector array oriented perpendicular to the elongated aperture.

18. An optical scanner for imaging a linear optical sample, comprising:
a housing;
a first lens mounted in the housing;
a field stop having an elongated slit aperture mounted in the housing adjacent the first lens;
a second lens mounted in the housing adjacent the field stop and opposite the first lens; and
a photodetector array mounted in the housing and aligned with the first lens, the field stop, and the second lens.

19. The scanner of claim 18 wherein the photodetector array is adapted to interface with a microprocessor.

20. The scanner of claim 18 wherein the photodetector array is substantially linear and is oriented substantially parallel to the linear optical sample and is oriented substantially perpendicular to the elongated slit.

21. A method for reducing spherical aberration comprising the steps of:
a) providing a first lens;
b) providing a substantially one-dimensional optical sample;
c) providing a field stop having a narrow substantially rectangular opening and positioned between the first lens and the optical sample;
d) providing an optical detector positioned opposite the first lens from the field stop;
e) orienting the field stop such that the narrow opening is substantially perpendicular to the optical sample; and
f) imaging the optical sample through the field stop and first lens onto an optical detector.

22. The method of claim 21 further comprising the steps of:
providing a second lens positioned between the field stop and the optical sample; and
providing an imaging aperture between the first lens and the optical detector.
